# EUROPÄISCHE PATENTSCHRIFT

(11) **EP 0 749 568 B1**
(45) Veröffentlichungstag und Bekanntmachung des Hinweises auf die Patenterteilung: **12.08.1998**
(21) Anmeldenummer: 95910448.0
(22) Anmeldetag: 06.03.1995
(51) Int. Cl.: G01N 7/10, G01N 13/04

(54) **OSMOMETER-MESSEINRICHTUNG UND VERFAHREN ZUR BESTIMMUNG DES GEHALTES DES ANALYTS AUS EINER STOFFGEMISCH-LÖSUNG**
OSMOMETRIC DEVICE AND PROCESS FOR DETERMINING THE ANALYTE CONTENT OF A SOLUTION OF MIXED SUBSTANCES
DISPOSITIF OSMOMETRIQUE ET PROCEDE DE DETERMINATION DE LA TENEUR EN ANALYTE D'UN MELANGE DE SUBSTANCES EN SOLUTION

(30) Priorität: 08.03.1994 DE 4407637
(43) Veröffentlichungstag der Anmeldung: 27.12.1996
(73) Patentinhaber: FORSCHUNGSZENTRUM JÜLICH GMBH, 52425 Jülich (DE)
(72) Erfinder: BÖLING, Gerd, D-52459 Inden-Pier (DE)
(86) Internationale Anmeldenummer: DE9500323
(87) Internationale Veröffentlichungsnummer: WO9524629

(56) Entgegenhaltungen:
- EP-A- 0 183 072
- EP-A- 0 280 109
- DE-C- 3 825 208
- US-A- 3 866 460

## Beschreibung

Die Erfindung bezieht sich auf eine Osmometer-Meßeinrichtung zur Bestimmung des Gehaltes des aus einem oder mehreren Stoffen einer Stoffgemisch-Lösung bestehenden Analyts, die eine aus einer starren Wandung und einer Membran bestehende osmotische Zelle mit Druckmeßeinrichtung aufweist. Die Erfindung bezieht sich ferner auf ein Verfahren zur Bestimmung des Gehalts des aus einem oder mehreren Stoffen einer Stoffgemisch-Lösung bestehenden Analyts unter Verwendung der Osmometer-Meßeinrichtung.

Eine derartige Meßeinrichtung bzw. ein derartiges Verfahren sind beispielsweise aus der DE-OS 35 25 668, auch aus der europäischen Patentschrift 0 183 072 bekannt. Der Meßkopf der bekannten Meßeinrichtung besitzt eine Membran, die ein derartiges Rückhaltevermögen für die Stoffe aufweist, daß zumindest einer der zu untersuchenden Stoffe in der Stoffgemisch-Lösung in Bezug auf die Membran permeierend und mindest einer nichtpermeierend ist.

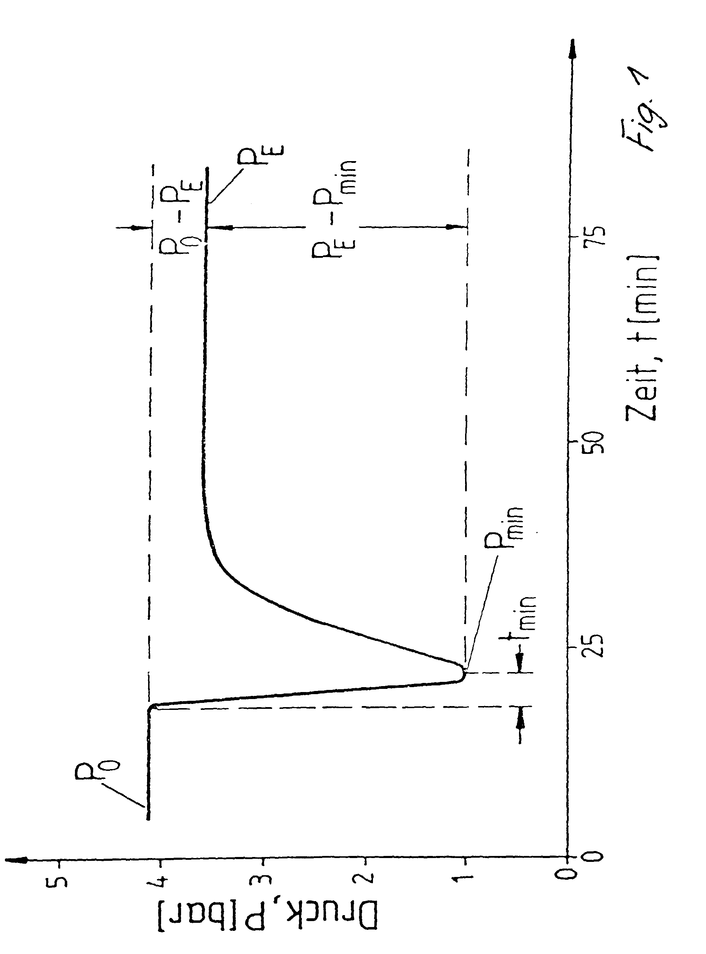

Bei Durchführung des bekannten Verfahrens stellt sich der in Figur 1 der Zeichnung wiedergegebene Druckverlauf in der osmotischen Zelle des Meßkopfes ein, der mittels einer hydrostatischen Druckmeßeinrichtung, bestehend aus Druckaufnehmermembran und Druckaufnehmer, gemessen worden ist.. Dabei wird zunächst der Arbeitsdruck P₀ eingestellt, indem eine hierzu geeignete Lösung (Lösungsmittel) über die Membran mit der Osmometerlösung in Verbindung gebracht wird. Sodann wird die Stoffgemisch-Lösung an die Membran herangeführt, wonach sich zunächst dadurch, daß Lösungsmittel aus der osmotischen Zelle schnell durch die Membran nach außen permeiert, innerhalb der relativ kurzen Zeitspanne tₘᵢₙ der Minimaldruck Pₘᵢₙ einstellt. Allmählich stellt sich dann - infolge der langsameren Permeation des oder der in Bezug auf die Membran permeierenden Stoffe - der Enddruck P_{E} ein. Bei der Bestimmung des Gehaltes der Stoffe wird von den ermittelten Druckwerten P₀, Pₘᵢₙ und P_{E} Gebrauch gemacht.

Wie der in Figur 1 wiedergegebene Druckverlauf zeigt, ergibt sich bei Anwendung des bekannten Verfahrens eine Meßzeit von mindestens 30 Min. Auch die Regenerationszeit ist entsprechend lang.

In der Praxis hat sich diese Meßzeit als zu lang erwiesen. Insbesondere gilt dies für One line Messungen, wenn es beispielsweise um die Überwachung eines Produktionsprozesses geht, wie beispielsweise bei der Herstellung von Bier.

Es ist daher Aufgabe der Erfindung, eine Osmometer-Meßeinrichtung zu schaffen, die es erlaubt, den Gehalt eines Analyts in einer Stoffgemisch-Lösung in kürzerer Zeit, als dies bisher möglich war, zu bestimmen. Dies bedingt auch eine entsprechend schnellere Verfahrensweise.

Diese Aufgabe wird erfindungsgemäß durch eine Osmometer-Meßeinrichtung gelöst, bei der der osmotischen Zelle mit Druckmeßeinrichtung anstelle nur einer osmotischen Zelle eine aus zwei hintereinandergeschalteten osmotischen Zellen bestehende Zweikammer-Meßzelle vorgesehen ist, indem der osmotischen Zelle (A) mit Druckmeßeinrichtung eine zweite, eine starre Wandung aufweisende osmotische 7elle (B) über die innere Membran (a), die Membran der ersten osmotischen Zelle (A), vorgeschaltet ist und die äußere Membran (b), die Membran der zweiten osmotischen Zelle (B), einen Teil der Wandung einer Leitung bildet, die mit einer Zuleitung in Verbindung steht, über die wahlweise eine zur Einstellung des Arbeitsdrucks geeignete Lösung (Lösungsmittel) oder Stoffgemisch-Lösung zugeführt wird, und daß die innere Membran (a) Analyt-impermeabel, aber Lösungsmittel-permeabel und die äußere Membran (b) Analyt-permeabel, für die übrigen Stoffe des Stoffgemisches aber impermeabel ist und daß sich in beiden osmotischen Zellen (A und B) das gleiche, nichtpermeierende Osmotikum bei gleicher Osmolarität (bzw. hydrostatischem Druckausgleich) im Ausgangs- bzw. regenerierten Grundzustand (bei eingestelltem Arbeitsdruck) befindet.

Bei der erfindungsgemäßen Osmometer-Meßeinrichtung mit Zweikammer-Meßzelle gelangt - bei geeigneter Wahl der Membranen - nur der Analyt, für den die äußere Membran kein Hindernis darstellt, in die Meßzelle, während die übrigen, für die Messung nicht interessierenden bzw. die Messung störenden Stoffe nicht in die Meßzelle gelangen.

Hierzu ist folgendes festzuhalten:

Analyt-impermeabel heißt, daß das Rückhaltevermögen der Membran für den Analyten so groß ist, daß der Austausch des Analyts durch die Membran gegenüber dem Austausch des reinen Lösungsmittels über die Membran derart verzögert ist, daß während der Austauschphase des reinen Lösungsmittels der Austausch des Analyts nur gering ist.

In gleicher Weise bedeutet "Analyt-permeabel, für die übrigen Stoffe des Stoffgemisches aber impermeabel", daß der Austausch der übrigen Stoffe durch die äußere Membran derart verzögert ist, daß während des Austausches des permeablen Analyts durch die äußere Membran kein merkbarer Austausch der impermeablen Stoffe durch die äußere Membran stattfindet. Oder: Daß die Geschwindigkeitskonstante für den Analyten genügend groß ist gegenüber dem der übrigen Stoffe, so daß also während des Meßvorganges die impermeablen, übrigen Stoffe nicht durch die äußere Membran gelangen.

Das bedeutet andererseits, daß bei vorgegebener Membran ein Stoff (Analyt) dann als permeabel im Sinne der durch die Erfindung gegebenen Lehre anzusehen ist, wenn er während der Durchführung der Messung gegenüber dem reinen Lösungsmittel hinreichend verzögert, gegenüber den übrigen, impermeablen Stoffen jedoch hinreichend schnell durch die entsprechende Membran gelangt.

Ein geeignete Verfahrensweise bei Einsatz der erfindungsgemäßen Osmometer-Meßeinrichtung besteht darin, daß zunächst über die an die äußere Membran (b) angrenzende Leitung zur Einstellung des Arbeitsdrucks eine hierzu geeignete Lösung (Lösungsmittel), anschließend die Stoffgemisch-Lösung zugeführt wird und aus der hydrostatischen Druckänderung, die sich infolge der Permeation des Analyts in die vorgehaltene osmotische Zelle (B) in der nachgeschalteten osmotischen Zelle (A) einstellt, der Gehalt des Analyts in der Stoffgemisch-Lösung bestimmt wird.

Die erfindungsgemäße Meßeinrichtung kann unter Anwendung des erfindungsgemäßen Verfahrens beispielsweise eingesetzt werden, um den Alkoholgehalt in Bier zu bestimmen. Wird - nach Einstellen des Arbeitsdruckes Bier über die Leitung an die äußere Membran der Zweikammer-Meßzelle herangeführt, dann gelangt Alkohol und Wasser schnell ohne Verzögerung durch die äußere Membran und in die vorgeschaltete osmotische Zelle (A). Es wird aber kein bzw. kaum Alkohol in die nachgeschaltete osmotische Zelle (B) gelangen. Zugleich aber strömt Wasser nach dem Umkehrosmose-Prinzip mit hoher Geschwindigkeit von Zelle (A) in die nachgeschaltete osmotische Zelle (B). Die sich dabei einstellende hydrostatische Druckänderung, die mittels der Druckmeßeinrichtung gemessen wird, ist ein Maß für den Gehalt des Alkohols. Dabei ist es nicht erforderlich, wie dies nach dem eingangs angegebenen bekannten Verfahren der Fall ist, den Teilchenstrom, d.h. die Permeation des Alkohols durch die innere Membran in die nachgeschaltete osmotische Zelle (A), abzuwarten und zu vermessen.

Eine vorteilhafte Ausführungsvariante des erfindungsgemäßen Verfahrens beteht daher darin, daß unmittelbar nach Ermittlung der hydrostatischen Druckänderung die Regenerierungsphase eingeleitet wird, indem die in der Leitung befindliche Stoffgemisch-Lösung durch zur Einstellung des Arbeitsdrucks geeignete Lösung (Lösungsmittel) ausgetauscht wird.

Da schon die auf der reinen "Wasserphase" gründende Bestimmung des Analyts nur wenig Zeit braucht, wird auch für die Regenerierungsphase, bei der ja lediglich Wasser bzw. Lösungsmittel wieder in die erste osmotische Zelle (A) zurückfließt, nur wenig Zeit benötigt.

Die Bestimmung des Analyts kann auch dadurch erfolgen, daß der zeitliche Verlauf der hydrostatischen Druckänderung, der sich infolge der Permeation des Analyts in die vorgeschaltete osmotische Zelle (B) in der nachgeschalteten osmotischen Zelle (A) einstellt, ermittelt und zur Bestimmung des Gehalts des Analyts herangezogen wird.

In der Zeichnung ist die erfindungsgemäße Osmometer-Meßeinrichtung schematisch dargestellt und wird im folgenden noch einmal kurz erläutert.

Es zeigen:
- Figur 1: Druckverlauf bei der bekannten Osmometer-Meßeinrichtung;
- Figur 2: Osmometer-Meßeinrichtung gemäß der Erfindung;
- Figur 3: Druckverläufe bei Durchführung des erfindungsgemäßen Verfahrens.

Auf den in Figur 1 wiedergegebenen Druckverlauf wurde bereits eingegangen.

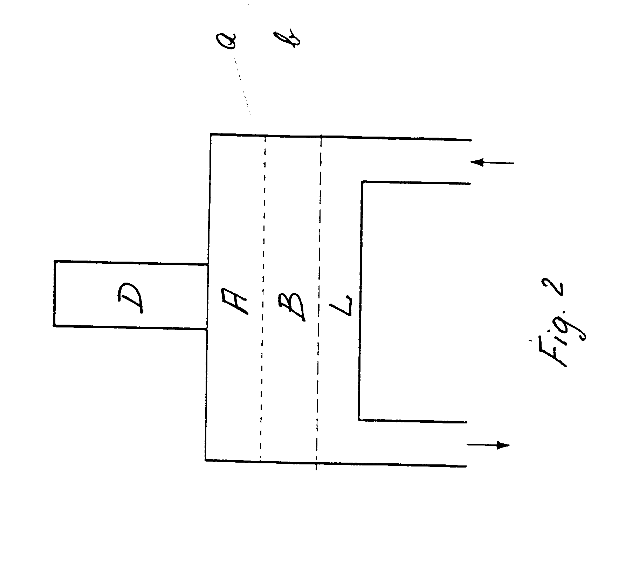

Figur 2 zeigt das Zweikammersystem, bestehend aus osmotischer Zelle A und vorgeschalteter osmotischer Zelle B. Die beiden Zellen sind durch die innere Membran a voneinander getrennt bzw. stehen über die innere Membran miteinander in Verbindung. Der osmotischen Zelle B ist über die äußere Membran b des Zweikammersystems die Leitung L vorgeschaltet, durch die wahlweise Lösungsmittel und Stoffgemisch-Lösung fließt.

An der osmotischen Zelle A befindet sich die aus Druckaufnehmermembran und Druckaufnehmer bestehende Druckmeßeinrichtung D.

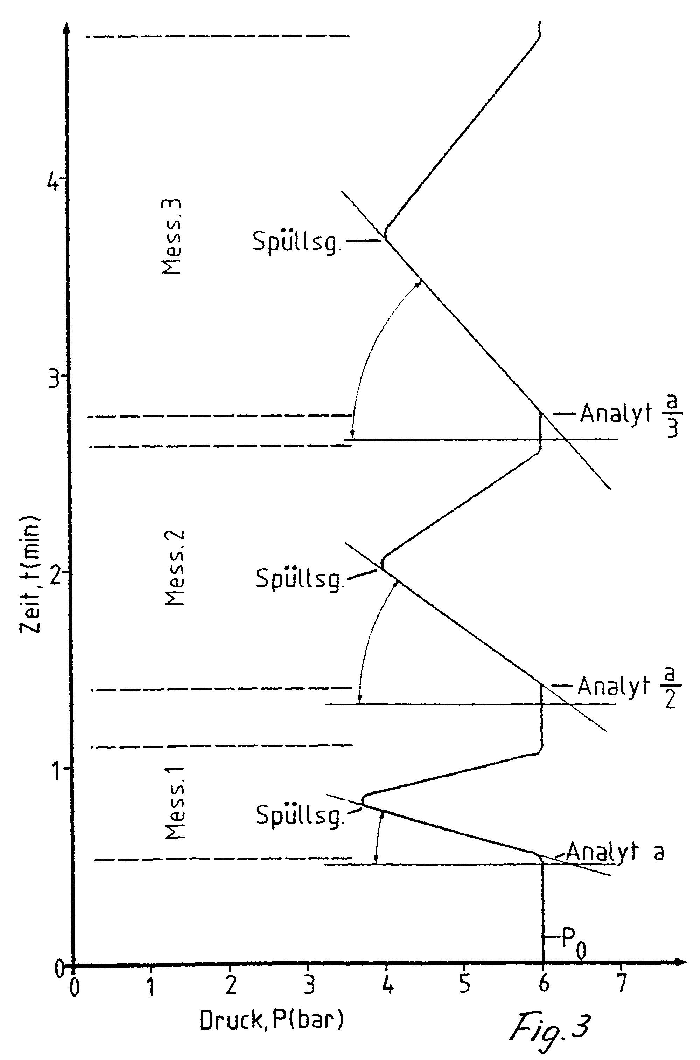

In Figur 3 sind die Druckverläufe bei drei nacheinander vorgenommenen Messungen dargestellt. Die Stoffgemisch-Lösungen, die nacheinander - mit jeweiliger Zwischenspülung mit Lösungsmittel - über die Leitung L (siehe Figur 2) dem Zweikammersystem zugeführt wurden, unterscheiden sich in der Konzentration des Analyts (beispielsweise Alkohol). Die erste Stoffgemisch-Lösung enthält die Konzentration a an Analyt, die zweite Stoffgemisch-Lösung die Konzentration a/2 und die dritte die Konzentration a/3.

Wie aus Figur 3 hervorgeht, nimmt die Anfangsneigung der Druck/Zeit-Kurve bei nachfolgenden Messungen ab, und zwar in dem Sinne, daß die Anfangsneigung bei zunehmender Konzentration des Analyts proportional zunimmt.

Aus Figur 3 ist außerdem zu entnehmen, daß die für die Regenerierungsphase benötigte Zeit der Zeit des jeweiligen Druckabfalls entspricht. Die Regenerierungsphase beginnt dann, wenn anstelle der Stoffgemisch-Lösung wieder die Lösung durch die Leitung L fließt, bei der sich der Arbeitsdruck P_{O} einstellt. Es kann sich dabei um reines Lösungsmittel (beispielsweise Wasser) handeln (in Figur 3 mit Spüllösung (Spüllsg.) bezeichnet).

Wie sich ferner aus Figur 3 ergibt, beträgt die Meßzeit bei der ersten Spülgemisch-Lösung etwas mehr als 0,6 min (von etwa 0,5 1,1), bei der zweiten Stoffgemisch-Lösung ca. 1,3 min (von etwa 1,3 - 2,6) und bei der dritten Stoffgemisch-Lösung ca. 1,9 min (von etwa 2,8 - 4,7).

## Patentansprüche

1. Osmometer-Meßeinrichtung zur Bestimmung des Gehaltes des aus einem oder mehreren Stoffen einer Stoffgemisch-Lösung bestehenden Analyts, die eine aus einer starren Wandung und einer Membran bestehende osmotische Zelle mit Druckmeßeinrichtung aufweist,
**dadurch gekennzeichnet**,
daß anstelle nur einer osmotischen Zelle eine aus zwei hintereinandergeschalteten osmotischen Zellen bestehende Zweikammer-Meßzelle vorgesehen ist, indem der osmotischen Zelle (A) mit Druckmeßeinrichtung eine zweite, eine starre Wandung aufweisende osmotische Zelle (B) über die innere Membran (a), die Membran der ersten osmotischen Zelle (A), vorgeschaltet ist und die äußere Membran (b), die Membran der zweiten osmotischen Zelle (B), einen Teil der Wandung einer Leitung bildet, die mit einer Zuleitung in Verbindung steht, über die wahlweise eine zur Einstellung des Arbeitsdrucks geeignete Lösung (Lösungsmittel) oder Stoffgemisch-Lösung zugeführt wird, und daß die innere Membran (a) Analyt-impermeabel, aber Lösungsmittel-permeabel und die äußere Membran (b) Analyt-permeabel, für die übrigen Stoffe des Stoffgemisches aber impermeabel ist und daß sich in beiden osmotischen Zellen (A und B) das gleiche, nichtpermeierende Osmotikum bei gleicher Osmolarität (bzw. hydrostatischem Druckausgleich) im Ausgangs- bzw. regenerierten Grundzustand (bei eingestelltem Arbeitsdruck) befindet.

2. Verfahren zur Bestimmung des Gehalts des aus einem oder mehreren Stoffen einer Stoffgemisch-Lösung bestehenden Analyts unter Verwendung der Osmometer-Meßeinrichtung gemäß Anspruch 1,
**dadurch gekennzeichnet,**
daß zunächst über die an die äußere Membran (b) angrenzende Leitung zur Einstellung des Arbeitsdrucks eine hierzu geeignete Lösung (Lösungsmittel), anschließend die Stoffgemisch-Lösung zugeführt wird und aus der hydrostatischen Druckänderung, die sich infolge der Permeation des Analyts in die vorgeschaltete osmotische Zelle (B) in der nachgeschalteten osmotischen Zelle (A) einstellt, der Gehalt des Analyts in der Stoffgemisch-Lösung bestimmt wird.

3. Verfahren nach Anspruch 2,
**dadurch gekennzeichnet,**
daß unmittelbar nach Ermittlung der hydrostatischen Druckänderung die Regenerierungsphase eingeleitet wird, indem die in der Leitung befindliche Stoffgemisch-Lösung durch zur Einstellung des Arbeitsdrucks geeignete Lösung (Lösungsmittel) ausgetauscht wird.

4. Verfahren nach Anspruch 2 oder 3,
**dadurch gekennzeichnet,**
daß der zeitliche Verlauf der hydrostatischen Druckänderung, der sich infolge der Permeation des Analyts in die vorgeschaltete osmotische Zelle (B) in der nachgeschalteten osmotischen Zelle (A) einstellt, ermittelt und zur Bestimmung des Gehalts des Analyts herangezogen wird.

## Claims

1. An osmometric device for determining the content of an analyte consisting of one or more substances of a solution of a mixture of substances. which comprises an osmotic cell consisting of a rigid wall and a membrane with a pressure measuring device,
characterised in that
instead of only one osmotic cell a two-chamber measuring cell is provided which consists of two osmotic cells connected in series, in that a second osmotic cell (B) which comprises a rigid wall is connected upstream of the osmotic cell (A) which comprises the pressure measuring device, via the inner membrane (a) which is the membrane of the first osmotic cell (A), and the outer membrane (b), which is the membrane of the second osmotic cell (B), forms part of the wall of a line which communicates with a feed line via which a solution (solvent) suitable for setting the operating pressure or a solution of a mixture of substances is fed in alternately. and that the inner membrane (a) is impermeable to the analyte but permeable to solvent, and the outer membrane (b) is permeable to the analyte but is impermeable to the other substances of the mixture of substances, and that the same, non-permeating osmotic medium is situated in both osmotic cells (A and B) at the same osmolarity (or hydrostatic pressure equalisation) in the initial or regenerated base state (at a set operating pressure).

2. A method of determining the content of an analyte consisting of one or more substances of a solution of a mixture of substances using the osmometric device according to claim 1,
characterised in that
in order to set the operating pressure, a solution (solvent) which is suitable for this purpose is first fed in via the line adjoining the outer membrane (b), the solution of the mixture of substances is subsequently fed in, and the content of analyte in the solution of the mixture of substances is determined from the change in hydrostatic pressure which occurs in the osmotic cell (A) connected downstream, as a result of the permeation of the analyte into the osmotic cell (B) connected upstream.

3. A method according to claim 2,
characterised in that
directly after determining the change in hydrostatic pressure the regeneration phase is initiated by replacing the solution of the mixture of substances which is situated in the line by a solution (solvent) which is suitable for setting the operating pressure.

4. A method according to claims 2 or 3,
characterised in that
the chronological course of the change in hydrostatic pressure. which occurs in the osmotic cell (A) connected downstream as a result of the permeation of the analyte into the osmotic cell (B) connected upstream. is ascertained and is used for determining the content of the analyte.

## Revendications

1. Dispositif osmométrique de détermination de la teneur en analyte constitué d'une substance ou de plusieurs substances d'un mélange de substances en solution, qui comporte une cellule osmotique constituée d'une paroi rigide et d'une membrane et ayant un dispositif de mesure de la pression
caractérisé
en ce qu'au lieu de ne prévoir qu'une cellule osmotique, il est prévu une cellule de mesure à deux chambres, constituée de deux cellules osmotiques montées en série en montant en amont de la cellule (A) osmotique, ayant un dispositif de mesure de la pression, une deuxième cellule (B) osmotique comportant une paroi rigide au dessus de la membrane (a) intérieure qui est la membrane de la première cellule (A) osmotique, et la membrane (b) extérieure qui est la membrane de la seconde cellule (B) osmotique forme une partie de la paroi d'un conduit qui communique avec un conduit d'entrée par lequel il peut être amené au choix une solution qui convient pour régler la pression de travail (solvant) ou une solution d'un mélange de substances et en ce que la membrane (a) intérieure est imperméable à l'analyte mais perméable au solvant et la membrane (b) extérieure est perméable à l'analyte, mais est imperméable aux autres substances du mélange de substances et en ce qu'il règne dans les deux cellules (A et B) osmotiques la même osmotique non perméable pour la même osmolarité (ou compensation de pression hydrostatique) à l'état fondamental initial et régénéré (pour une pression de travail réglée).

2. Procédé de détermination de la teneur en analyte constitué d'une substance ou de plusieurs substances d'un mélange de substances en solution en utilisant le dispositif osmométrique suivant la revendication 1,
caractérisé
en ce qu'il consiste à envoyer d'abord par le conduit adjacent à la membrane (b) extérieure en vue d'établir la pression de travail une solution qui convient à cet effet (solvant), puis d'envoyer le mélange de substances en solution et à déterminer à partir de la variation de pression hydrostatique qui s'établit dans la cellule (A) osmotique en aval, en raison de la perméation de l'analyte dans la cellule (B) osmotique en amont, la teneur en analyte du mélange de substances en solution.

3. Procédé suivant la revendication 2,
caractérisé
en ce qu'il consiste à faire commencer, immédiatement après la détermination de la variation de la pression hydrostatique, la phase de régénération en remplaçant le mélange de substances en solution se trouvant dans le conduit par de la solution (solvant) qui convient pour établir la pression de travail.

4. Procédé suivant la revendication 2 ou 3,
caractérisé
en ce qu'il consiste à déterminer la courbe en fonction du temps de la variation de pression hydrostatique qui s'établit dans la cellule (A) osmotique en aval, en raison de la perméation de l'analyte dans la cellule (B) osmotique en amont et à en tirer parti pour déterminer la teneur en analyte.
